# EUROPEAN PATENT SPECIFICATION

(11) **EP 2 630 821 B1**
(45) Date of publication and mention of the grant of the patent: **07.03.2018**
(21) Application number: 10773611.8
(22) Date of filing: 22.10.2010
(51) Int. Cl.: H04W 28/16, H04L 29/06, H04L 12/851, H04L 12/26, H04W 28/24, H04L 29/12, H04W 80/04, H04W 8/26

(54) **ADAPTATION OF QUALITY OF SERVICE IN HANDLING NETWORK TRAFFIC**
ANPASSUNG DER DIENSTGÜTE BEI DER HANDHABUNG VON NETZWERKVERKEHR
ADAPTATION DE LA QUALITÉ DE SERVICE DANS LA GESTION DU TRAFIC D'UN RÉSEAU

(43) Date of publication of application: 28.08.2013
(73) Proprietor: Telefonaktiebolaget LM Ericsson (publ), 164 83 Stockholm (SE)
(72) Inventor: LUDWIG, Reiner, 52393 Hürtgenwald (DE); BOBERG, Christer, S-137 55 Tungelsta (SE); DAMOLA, Ayodele, S-169 59 Solna (SE); WILLARS, Per, S-185 94 Vaxholm (SE)
(74) Representative: Ericsson
(86) International application number: PCT/EP2010/065985
(87) International publication number: WO 2012/052064

(56) References cited:
- EP-A1- 2 109 266
- US-A1- 2006 002 377
- US-A1- 2007 259 673
- US-A1- 2009 227 228
- LUDWIG R ET AL: "An evolved 3GPP QoS concept", INTERNET CITATION, 10 May 2006 (2006-05-10), pages 388-392, XP002482553, Retrieved from the Internet: URL:http://ieeexplore.ieee.org/iel5/11096/ 35441/01682842.pdf?tp=&isnumber =&arnumber=1682842 [retrieved on 2008-06-02]

## Description

### Technical Field

The present invention relates to methods of handling network traffic and to a corresponding network device.

### Background

In communication networks, differentiated handling of network traffic may be used to meet requirements with respect to Quality of Service (QoS) depending on the type of network traffic. For this purpose, a forwarding treatment of data packets, i.e. the way of forwarding data packets by a node, may be adjusted so as to obtain a desired QoS level. In this respect, it is to be understood that in typical scenarios the data packet will pass through one or more nodes while being transmitted toward its destination, and that the forwarding treatment may be adjusted in only one node, in some nodes, or in all nodes the data packet passes.

For example, in mobile communication networks network traffic related to a specific service may be directed to a bearer offering a certain QoS level. In this respect, a bearer is considered to be an information transmission context or path of defined characteristics, e.g. capacity, delay and/or bit error rate. Typically, a number of bearers will be established between a gateway of a mobile communication network and a user equipment, e.g. a mobile phone or other type of mobile terminal. A bearer may carry downlink (DL) data traffic in a direction from the network to the user equipment, and may carry data traffic in an uplink (UL) direction from the user equipment to the network. In the gateway and in the user equipment the data traffic, which includes a plurality of IP data packets (IP: "Internet Protocol", which may be the IP Version 4, also referred to as IPv4, or the IP Version 6, also referred to as IPv6) can be filtered, e.g. using IP 5-tuple packet filters, thereby directing the IP data packets to a desired bearer.

Differentiated handling of network traffic may also be useful in other types of communication network environment, e.g. using fixed access technology such as DSL (Digital Subscriber Line), fibre optical access or coaxial cable access.

However, reliably determining the traffic type may require significant resources and complex procedures.

Accordingly, there is a need for powerful and efficient techniques for differentiated handling of network traffic, which allow for assigning data packets a desired QoS level.

US2009/0227228 A1 discloses a method for a mobile data access network to make policy control and charging decisions based on domain name queries.

### Summary

The invention is defined by claims 1, 13 and 15.

According to an embodiment of the invention, a method of handling network traffic is provided. According to the method, a Domain Name System message is received. A network label identifying a network resource is extracted from a payload section of the message, and and a node communicating data packets with the network resource is identified on the basis of a network address included in the Domain Name System message. The extracted network label is compared to at least one stored network label to determine that the data packets to be communicated between the node identified by said source network address and the network resource require a certain quality of service level. On the basis of the comparison, adaptation of a quality of service level for a forwarding treatment of data packets communicated between the node identified by said source network address and the network resource is initiated.

According to a further embodiment of the invention, a network device is provided. The network device is provided with an interface, a memory, and a processor. At least one network label is stored in the memory. The interface is configured to receive a Domain Name System message and the processor is configured to extract a network label from the message, to identify a node communicating data packets with the network resource on the basis of a network address included in the Domain Name System message, to compare the extracted network label to the at least one stored network label to determine that the data packets to be communicated between the node identified by said source network address and the network resource require a certain quality of service level, and to initiate adaptation of a quality of service level for a forwarding treatment of data packets communicated between the node identified by said source network address and the network resource on the basis of the comparison.

According to further embodiments, other methods, devices, or computer program products for implementing the methods may be provided.

### Brief Description of the Drawings

Fig. 1 schematically illustrates a communication system in which concepts according to embodiments of the invention are implemented.
Fig. 2 schematically illustrates a table of stored network labels which may be used in a traffic type detector according to an embodiment of the invention.
Fig. 3 shows a signaling diagram for illustrating a scenario of traffic forwarding control according to an embodiment of the invention.
Fig. 4 shows a signaling diagram for illustrating a further scenario of traffic forwarding control according to an embodiment of the invention.
Fig. 5 shows a signaling diagram for illustrating a scenario of traffic forwarding control according to an embodiment of the invention.
Fig. 6 schematically illustrates a network device according to an embodiment of the invention.
Fig. 7 shows a flowchart for illustrating a method according to an embodiment of the invention.

### Detailed Description of Embodiments

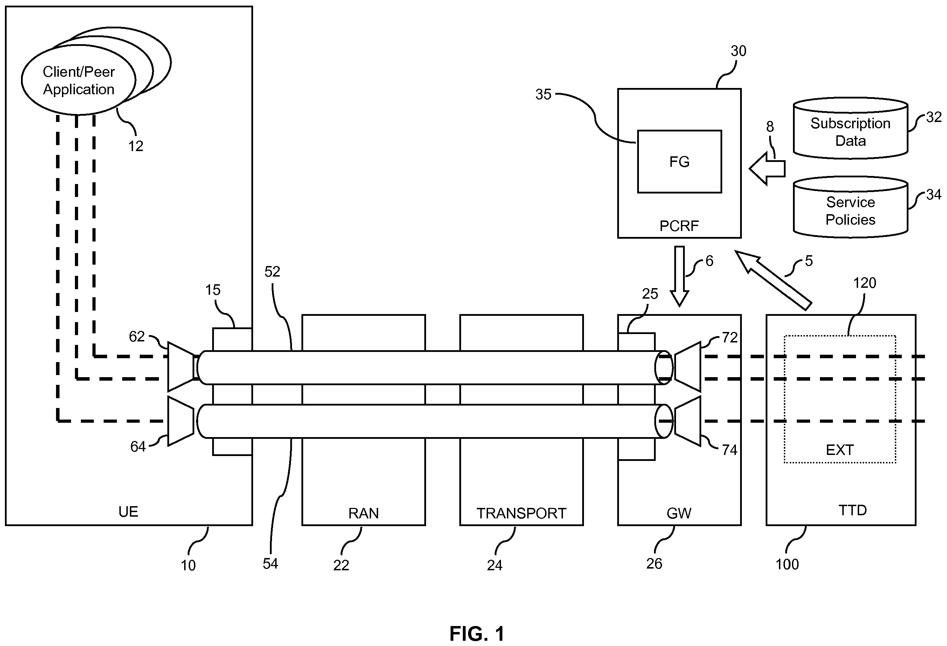

In the following, the invention will be explained in more detail by referring to exemplary embodiments and to the accompanying drawings. The illustrated embodiments relate to concepts of handling of network traffic. As illustrated in Fig. 1, the concepts are applied in a mobile communication network according to the 3GPP (Third Generation Partnership Project) Technical Specifications (TSs). However, it is to be understood that the illustrated concepts may be applied in other types of communication network as well, e.g. using fixed access technology such as DSL, fiber optical access, or coaxial cable access.

Fig. 1 schematically illustrates a communication network environment in which concepts according to embodiments of the invention the invention can be applied.

The communication network environment includes a UE 10, which may also be referred to as a terminal, and a number of network components 22, 24, 26, 30. Among these network components there is a Radio Access Network (RAN) 22. The RAN is based on a certain type or certain types of radio access technology, e.g. GSM (Global System for Mobile Communications), EDGE (Enhanced Data Rate for GSM Evolution), UMTS (Universal Mobile Telecommunications System) or LTE (Long Term Evolution). Although the RAN 22 is illustrated as a single node, it is to be understood that the RAN 22 may actually be formed of a number of components, which are not further explained herein. The RAN 22 is coupled to a transport node 24, which in turn is coupled to a gateway (GW) 26. Here, it is to be understood that alternatively more than one transport node 24 may be coupled between the RAN 22 and the gateway 26 or that the RAN 22 may be directly coupled to the gateway 26. The gateway 26 may be a Gateway GPRS Support Node (GGSN) providing a connection of GPRS-based services to one or more external packet data networks. The gateway 26 may also be a System Architecture Evolution Gateway (SAE GW) according to the 3GPP TSs.

In addition, the mobile communication network includes a policy controller 30, which is implemented as a Policy and Charging Rules Function (PCRF) according to the 3GPP TSs. The policy controller 30 may be implemented by dedicated hardware and/or comprise software functions executed by a processor. The gateway 26 and the policy controller 30 are typically regarded as components of a core network. The policy controller 30 communicates with the gateway 26 via a signaling path 6, which may be implemented using the Gx interface according to the 3GPP TSs. The policy controller 30 may be further coupled to a subscription database 32 and to a service policy database 34 via a signaling path 8, e.g. implemented using a Sp interface according to the 3GPP TSs. The policy controller 30 may thus receive policy data relating to a specific user and/or relating to a specific service available in the mobile communication network, e.g. mobile TV. The policy controller 30 may further communicate with other network functions using a control signaling path 5, which may be implemented using the Rx interface according to the 3GPP TSs.

Among other functions, the policy controller 30 may comprise a filter generator 35. The filter generator 35 is adapted to specify packet filters to be used in the UE 10 and the gateway 26, which may be accomplished on the basis of subscription data from the subscription database 32, service policies from the service policy database 34, and control data received via the signaling path 5.

As further illustrated, service-related data traffic between the network and the user equipment 10 is carried by a number of bearers 52, 54. The service-related data traffic typically pertains to one or more client/peer applications 12 running on the UE 10. The bearers 52, 54 are established between the user equipment 10 and the gateway 26. The bearers 52, 54 carry data traffic in both the DL and the UL direction, i.e. may also be regarded as being formed of a DL bearer and a UL bearer. For supporting bidirectional communication on the bearers 52, 54, the UE 10 is provided with a corresponding interface 15 which allows for receiving incoming data packets from the bearers 52, 54 and sending outgoing data packets on the bearers 52, 54. Similarly, the gateway 26 is provided is provided with a corresponding interface 25 which allows for receiving incoming data packets from the bearers 52, 54 and sending outgoing data packets on the bearers 52, 54. The bearers 52, 54 may include a default bearer 52 generally established for offering packet-based services to the user equipment 10 and one or more dedicated bearer 54 which may have different QoS level, e.g. a higher or lower QoS level, than the default bearer. The default bearer 52 is typically established when the UE 10 attaches to the gateway 26. The dedicated bearer is typically established on demand, e.g. when data packets requiring a certain QoS level need to transmitted. Each bearer 52, 54 may be associated with a corresponding QoS profile. The QoS profile may be defined through parameters such as a QoS Class Identifier (QCI), an Allocation/Retention Priority (ARP), a Traffic Handling Priority (THP), a Maximum Bit Rate (MBR), an Aggregate Maximum Bit Rate (AMBR), and/or a Guaranteed Bit Rate (GBR). Accordingly, a certain QoS level may be provided for communicating data packets between the UE 10 and the gateway 26 by assigning the data packets to a corresponding bearer. In addition, the QoS level provided for communicating the data packets may also be adapted by modifying an existing bearer, e.g. the default bearer 52.

In the UE 10, the data packets are routed to a desired bearer 52, 54 using correspondingly configured UL packet filters 62, 64. In the gateway 26, the data packets are routed to the desired bearers 52, 54 using correspondingly configured DL packet filters 72, 74. Parameters of the QoS profile may be signaled from the policy controller 30 to the gateway 26 using the signaling path 6. Similarly, the DL packet filters 72, 74 to be used in the gateway 26 may be signaled from the policy controller 30 to the gateway 26 via the signaling path 6. As regards the UL packet filters 62, 64 used in the UE 10, these may be signaled from the policy controller 30 via the gateway 26.

In the following, concepts according to embodiments of the invention will be explained, which allow for efficiently and reliably providing a desired level of QoS for a certain type of data packets. These concepts are based on monitoring certain messages which are typically transmitted when setting up or preparing the transmission of the data packets, e.g. Domain Name System (DNS) messages, i.e. DNS queries or responses to DNS queries, Hypertext Transfer Protocol (HTTP) requests, or the like. These messages may also be referred to as setup messages. As can be seen from the above-mentioned examples, a setup message may initiate the transfer of content by the data packets, e.g. if the setup message is a HTTP request. A setup message may also request protocol information to be used for transmitting the data packets, such as source or destination network addresses to be included into the headers of the data packets, e.g. if the setup message is a DNS query. A setup message may also convey such protocol information, e.g. if the setup message is a response to DNS query. By monitoring the setup messages, a traffic type of the data packets associated with the monitored message, e.g. transmitted subsequently or in response to the monitored message, may be determined without looking at or into the data packets themselves. Rather, such a determination can already be made before the data packets are communicated, i.e. transmitted or received. Therefore an adaptation of the QoS level may be initiated in a very direct manner. In particular, according to these concepts network labels are extracted from the monitored messages and compared to stored network labels. The network labels may be network names typically used to identify a network resource, e.g. domain names or hostnames, or may be network addresses typically used to specify where in the network a network resource can be found, e.g. IP addresses. The stored network labels indicate that the data packets to be communicated require a certain level of QoS, e.g. are to be considered as premium traffic. On the basis of the comparison, e.g. if the extracted network label matches one of the stored network labels, adaptation of the QoS level provided for communicating, i.e. transmitting or receiving, the data packets is initiated. For example, the QoS level may be adapted by controlling a bearer, which in turn may comprise modifying an existing bearer, e.g. the default bearer 52, or establishing a new dedicated bearer, e.g. the dedicated bearer 54. In this respect, modifying an existing bearer may involve changing parameters of the bearer's QoS profile. When newly establishing the dedicated bearer 54, this can be accomplished in such a way that the bearer gets the desired QoS profile. Typically, the QoS level will be increased by the adaptation. However, in some embodiments also a decrease of the QoS level may be initiated, e.g. if a stored network label is indicative of low priority traffic.

In order to implement these concepts, the communication system of Fig. 1 further includes a packet type detector (TTD) 100. As illustrated, the traffic type detector 100 is coupled to receive UL messages coming from the gateway 26 and to receive DL messages going to the gateway 26. According to an embodiment of the invention, the traffic type detector 100 may be part of the gateway 26. However, the traffic type detector 100 could also be implemented within other network devices or as a standalone network device. Also, it is to be understood that all data traffic to the gateway 26 and from the gateway 26 may be routed through the traffic type detector 100, or that the traffic type detector 100 may be provided with a copy of this data traffic. In some embodiments, the traffic type detector 100 may be provided only with copies of relevant network traffic, e.g. copies of certain message types which are to be monitored. Network labels indicating that the associated data traffic is associated with a certain traffic class are preconfigured in the traffic type detector 100, e.g. stored in a corresponding memory. These stored network labels may be configured into the traffic type detector 100 using corresponding control or maintenance procedures. In some embodiments, the traffic type detector 100 may also be configured to learn the network labels.

As illustrated, the traffic type detector 100 is provided with an extractor (EXT) 120, which extracts network labels from the monitored messages. This may be accomplished taking into account a format or syntax of the messages. For example, a format or syntax may define that a network label, e.g., a domain name, a hostname, or a network address, is included in a specific portion or field of the message. More specifically, the extractor 120 may take into account that the message will typically include a protocol header, e.g. an IP protocol header, and payload section on the highest protocol layer, which includes the message content. If the message is a DNS message, the payload section will include sections termed as "header", "question", "answer", "authorities", and "additional". In to some embodiments, a network label in the form of a hostname or a domain name may be extracted from the "question" section of the DNS message, and/or a network label in the form of a network address, in particular an IP address, may be extracted from the "answer" section of the DNS message. In some embodiments, a hostname or a domain name may also be extracted from the "answer" section of the DNS message. Here, it should be noted that the response to a DNS query typically also includes the questions section of the DNS query. If the message is a HTTP request, the payload section may include a request line, one or more general headers, one or more request headers, one or more entity headers, and a message body. In to some embodiments, a network label in the form of a hostname may be extracted from the request header(s) of the HTTP request.

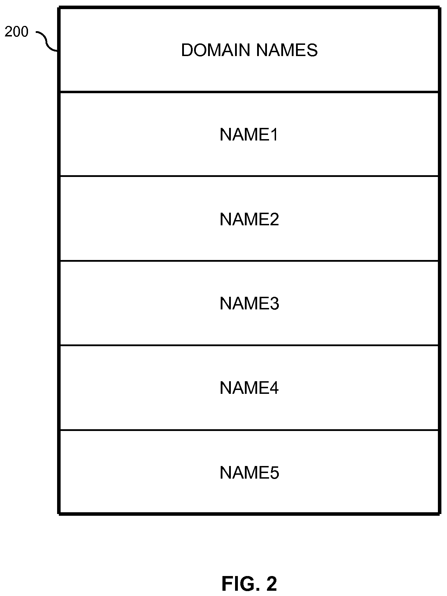

The extracted network labels are compared to the stored network labels, which may be stored in a table. A table format which may be used by the traffic type detector 100 is schematically illustrated in Fig. 2. In this example, a table 200 for storing network labels in the form of domain names substantially consists of a list of domain names NAME1, NAME2, NAME3, NAME4, NAME5. The domain names can be hostnames or other types of domain names, e.g. domain names identifying certain network domains. A similar table could also be used for storing network labels in the form of other hostname formats or network addresses, e.g. IP addresses.

If an extracted network label matches one of the stored network labels, this indicates that the data packets associated with this message, e.g. data packets to be communicated with a network resource which can be identified through a hostname extracted from the message or data packets transmitted to or from a network address extracted from the message, require a specific QoS level, e.g. are to be regarded as premium traffic.

It is to be understood that the comparison does not need to be based on requiring a complete match, but that only certain portions of the extracted network label match the stored network label. For example, in some embodiments the stored network labels may also include wildcards or the like. In some embodiments, the table could also be organized to differentiate between different traffic classes by storing the network labels in association with the corresponding traffic class. For example, each entry storing the network label could be related to a further entry indicating the associated traffic class. As an alternative, a separate list of stored network labels could be provided for each traffic class.

In some embodiments, the traffic type detector 100 may also evaluate additional messages associated with the data packets by extracting network labels and/or other parameters such as network addresses from the protocol header of the message. Specific examples of evaluating multiple messages will be explained below.

In response to a match between the extracted network label and a stored network label, the traffic type detector 100 initiates control processes for adaptation of the QoS level provided for communicating the data packets associated with the message. As illustrated, this may involve corresponding signaling to the policy controller 30 via the signaling path 5, which then takes appropriate actions by using signaling on the signaling path 6. In other embodiments, there may also be direct signaling from the traffic type detector 100 to the gateway 26. Moreover, it is to be understood that the signaling may be further propagated from the gateway 26 to the UE 10 and also have effect on intermediate nodes, e.g. the RAN 22 or the transport node 24. According to an embodiment of the invention, existing control signaling for bearer establishment or modification may be used for adapting the QoS level. In particular, this signaling may be used to modify an existing bearer, e.g. the default bearer 52, or to newly establish a dedicated bearer, e.g. the dedicated bearer 54. In some embodiments, the traffic type detector 100 may also signal additional information in response to detecting a match between the extracted identifier and one of the stored identifiers, e.g. a network address extracted from the message. This network address may then be used by the filter generator 35 of the policy controller 30 for generating UL packet filters 62, 64 or DL packet filters72, 74 for directing the data packets to the desired bearer 52, 54, e.g., to the dedicated bearer 54. This may in particular useful if a new dedicated bearer is to be established and there are no existing UL or DL packet filters which allow for routing the data packets to this new dedicated bearer.

In some embodiments, the initiated adaptation of the QoS level is restored in response to a triggering event. That is to say, the modified existing bearer is returned to its unmodified state or the newly established dedicated bearer is deactivated. According to some embodiments, the triggering event may be expiry of a timer. For example, the timer may be started upon adaptation of the QoS level. The timer could be restarted each time the traffic type detector 100 again indicates that the adapted QoS level is required. In other embodiments, other triggering events may be used. Also, in some embodiments the adapted QoS level may be maintained, e.g. until the UE 10 detaches from the RAN 22.

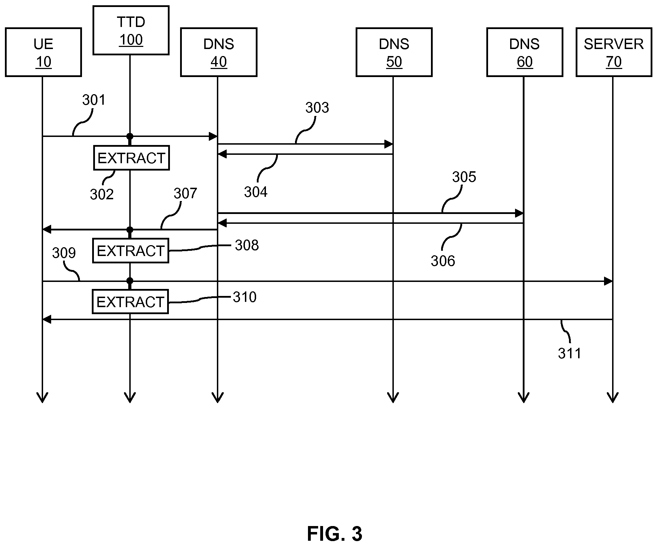

In the following exemplary scenarios of setting up communication of data packets will be explained in connection with Figs. 3-5. In these scenarios, various examples of messages which can be monitored by the traffic type detector 100 with respect to network labels are given.

Fig. 3 shows an exemplary scenario, in which the UE 10 requests data packets from a server 70 identified by a hostname, e.g. a HTTP web server. The hostname identifying the server 70 is in the form of a domain name. In this example, the traffic type detector 100 monitors messages coming from the UE 10 and messages going to the UE 10. Further, it is assumed that the traffic type detector 100 has stored this hostname to indicate that data traffic with respect to the server 70 is to be regarded as premium traffic. It will be first assumed that a network address of the web server 70, which in the illustrated example includes an IP address, is initially unknown to the UE 10.

Accordingly, since the network address of the web server is initially unknown to the UE 10, the UE 10 first issues a DNS query 301 to a local DNS server 40. The payload section of the DNS query 301, in particular the question section, includes the hostname of the server 70. Accordingly, this message 301 may be monitored by the traffic type detector 100 by extracting the hostname at step 302 and comparing the extracted hostname to the stored hostnames. In the present example, the traffic type detector 100 will find a match between the extracted hostname of step 302 and one of the stored hostnames, and therefore initiate the adaptation of the QoS level provided for communicating data packets with respect to the UE 10. This adaptation may be specific with respect to the UE 10 issuing the DNS query, i.e. other UEs may keep their original QoS level. The UE 10 may be identified by the traffic type detector 100 on the basis of a source network address in the protocol header of the DNS query 301, e.g. a source IP address. For this purpose, the traffic type detector may also extract the source network address from the protocol header of the DNS query 301. This is an example of how the traffic type detector 100 can identify a node, here the UE 10, communicating the data packets on the basis of a network address included in the monitored message itself, which in the present example is the DNS query 301.

When now assuming that the local DNS server 40 itself does not know the network address of the server 70, the local DNS server 40 will issue a further DNS query 303 to an external DNS server 50, which may be a Root DNS server 50. The external DNS server 50 then responds with a message 304 to the local DNS server 40, which includes the network address of a domain DNS server 60 serving the domain of the web server 70. The local DNS server 40 then issues a still further DNS query 305 to the domain DNS server 60. The domain DNS server 60 then responds with a message to the local DNS server 40, which includes the network address of the server 70. The local DNS server then sends a message 307 to the UE 10 so as to respond to the original DNS query 301. The payload section of the message 307, in particlular the answer section, will include the requested network address of the server 70. In addition, the payload section of the message 307, in particular the question section and/or the answer section, will typically also include the hostname for which the network address was requested in the original DNS query 301. According to some embodiments, the traffic type detector 100 may also monitor the message 307 generated in response to the original DNS query 301, e.g. by extracting the hostname at step 308 and optionally also comparing this extracted hostname to the stored hostnames. This may be done in addition or as an alternative to monitoring the original DNS query 301. In the present example, the traffic type detector 100 will find a match between the extracted hostname of step 308 and one of the stored hostnames, and therefore initiate the adaptation of the QoS level provided for communicating data packets with respect to the UE 10. This adaptation may be specific with respect to the UE 10 issuing the DNS query 301, i.e. other UEs may keep their original QoS level. The UE 10 may be identified by the traffic type detector 100 on the basis of a destination network address in the protocol header of the message 307. For this purpose, the traffic type detector may also extract the destination network address from the protocol header of the message 307. This is an example of how the traffic type detector 100 can identify a node communicating the data packets, here the UE 10, on the basis of a network address included in the monitored message itself, which in the present example is the message 307 generated in response to the DNS query 301.

From the message 307, the traffic type detector 100 may also extract the network address of the server 70, which may be used as a basis for generating one or more of the packet filters 62, 64, 72, 74 for routing the data packets communicated between the UE 10 and the server 70 to a desired bearer, e.g. a newly established dedicated bearer. In particular, the packet filter(s) may be generated to operate on the basis of the extracted network address. In addition, the traffic type detector 100 may also extract the destination network address from the protocol header of the message 307. The extracted destination network address may be useful for identifying the UE 10 as needing the adaptation of the QoS level, which may be an alternative to evaluating the source network address of the original DNS query 301. The extracted destination network address may also be useful for generating one or more of the packet filters 62, 64, 72, 74 for routing the data packets communicated between the UE 10 and the server 70 to a desired bearer, e.g. a newly established dedicated bearer. In particular, the packet filter(s) may be generated to operate on the basis of the extracted destination network address. Accordingly, this is a further example of how the traffic type detector 100 may initiate generation of a packet filter operating on the basis of the a network address extracted from the monitored message, which in the present example is the message 307.

The UE 10 may then request data packets from the server 70 by sending a message 309 to the server 70. For example, the message 309 may be a HTTP request for the data packets. Typically, the payload section of the message 309, in particular a request header, will include the hostname of the server 70. According to some embodiments, the traffic type detector 100 may also monitor the message 309, e.g. by extracting the hostname from the payload section at step 310 and optionally also comparing this extracted hostname to the stored hostnames. This may be done in addition or as an alternative to monitoring the original DNS query 301 and/or the message 307 returned to the UE 10 in response to the original DNS query 301. From the protocol header of the message 309, the traffic type detector 100 may also extract the network address of the server 70, which is the destination network address of the message 309 and may be used as a basis for generating one or more of the packet filters 62, 64, 72, 74 for routing the data packets communicated between the UE 10 and the server 70 to a desired bearer, e.g. a newly established dedicated bearer. In this case, the extracted destination network address may include not only the IP address of the server 70, but also a destination port used by the server 70. The packet filter(s) may thus be generated to operate on the basis of the extracted destination network address, e.g. on the basis of the extracted destination IP address and destination port. In addition, the traffic type detector may also extract a source network address of the message 309 from the protocol header. The extracted source network address may be useful for identifying the UE 10 as needing the adaptation of the QoS level. This is a still further example of how the traffic type detector 100 can identify a node communicating the data packets, here the UE 10, on the basis of a network address included in the monitored message itself, which in the present example is the message 309.

The extracted source network address may also be useful for generating one or more of the packet filters 62, 64, 72, 74 for routing the data packets communicated between the UE 10 and the server 70 to a desired bearer, e.g. a newly established dedicated bearer. In this case, the extracted source network address may include not only the IP address of the UE 10, but also a source port used by the UE 10. The packet filter(s) may thus be generated to operate on the basis of the extracted destination network address, e.g. on the basis of the extracted destination IP address and destination port. Accordingly, this is a further example of how the traffic type detector 100 may initiate generation of a packet filter operating on the basis of the a network address extracted from the monitored message, which in the present example is the message 309.

In addition or as an alternative to storing the hostname, the traffic type detector 100 could also store the network address of the server 70 to indicate that data traffic with respect to the server 70 is to be regarded as premium traffic. In this case, the traffic type detector 100 can also monitor the message 307 with respect to the network address in the payload section of the message 307 by extracting the network address from the payload section of the message 307 and comparing the extracted network address to the stored network addresses. In the present example, the traffic type detector 100 will find a match between the extracted network address and one of the stored network addresses. The adaptation of the QoS level may then be accomplished as explained above for the case of monitoring the message 307 with respect to the hostname.

It is to be understood that any of the extracted hostnames and/or other parameters such as network addresses in steps 302, 308 and 310 may be used individually or in combination as a basis for initiating the adaptation of the level of QoS. Operation on the basis of only the message 310 may be useful if the UE 10 has already knowledge of the web server's 70 network address, e.g. if the network address has been locally cached by the UE 10 so that there is no need for the UE 10 to issue the DNS query 301.

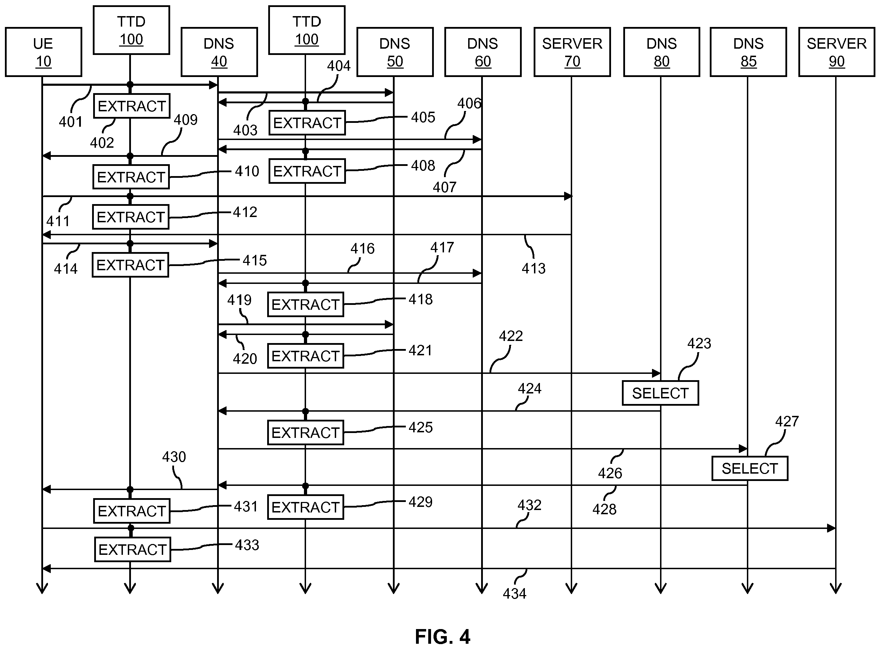

Fig. 4 shows an exemplary scenario, in which the UE 10 requests data packets from a server 90, e.g. a cache server, identified by a redirect hostname. In the scenario of Fig. 4, a response to an DNS query does not include the network address associated with the hostname, but a redirect hostname allowing to identify identifying a cache server or system of cache servers from which the data packets can be obtained. In this example, it may be the redirect hostname which is stored by the traffic type detector 100 to indicate that the data traffic with respect to the server 90 is to be regarded as premium traffic. In this example, the traffic type detector 100 therefore monitors messages between the UE 10 to the local DNS server 40 and also messages coming into the local DNS server 40 from external DNS servers. Therefore, Fig. 4 illustrates the traffic type detector 100 both between the UE 10 and the local DNS server 40, and also between the local DNS server 40 and external DNS servers. However, this does not mean that two separate instances of the traffic type detector 100 needs to be arranged at the illustrated locations. Rather, it may be sufficient to provide the traffic type detector 100 with copies of the traffic it is illustrated to monitor. In some embodiments, the traffic type detector may also be collocated with the local DNS server 40. Again, it will be first assumed that network addresses of involved servers are initially unknown to the UE 10.

In the scenario of Fig. 4, the UE 10 first issues a DNS query 401 for the network address of a server 70, e.g. a web server, to the local DNS server 40. The DNS query 401 includes the hostname of the server 70. Typically, the hostname will be in the form of a domain name. The message 401 may be monitored by the traffic type detector 100 by extracting the hostname at step 402 and comparing the extracted hostname to the stored hostnames. In the present example, the traffic type detector 100 will find no match between the extracted hostname of step 402 and one of the stored hostnames.

When now assuming that the local DNS server 40 itself does not know the network address of the server 70, the local DNS server 40 will issue a further DNS query 403 to an external DNS server 50, which may be a Root DNS server. The external DNS server 50 then responds with a message 404 to the local DNS server 40, which in the payload section, in particular in the authoritative section, includes the network address of a domain DNS server 60 serving the domain of the server 70. In addition, the payload section of the message 404, in particular the question section, will typically also include the hostname for which the network address was requested in the DNS query 403. According to some embodiments, the traffic type detector 100 may also monitor the message 404 generated in response to the DNS query 403, e.g. by extracting the hostname at step 405 and comparing the extracted hostname of step 405 to the stored hostnames. This may be done in addition or as an alternative to monitoring the original DNS query 401 at step 402. In the present example, the traffic type detector 100 will find no match between the extracted hostname of step 405 and one of the stored hostnames.

The local DNS server 40 then issues a still further DNS query 406 to the domain DNS server 60. The domain DNS server 60 then responds with a message 407 to the local DNS server 40. The payload section of the message 407, in particular the answers section, includes the network address of the server 70. In addition, the payload section of message 407, in particular the question section, will typically also include the hostname for which the network address was requested in the DNS query 406. According to some embodiments, the traffic type detector 100 may also monitor the message 407 generated in response to the DNS query 405, e.g. by extracting the hostname at step 408 and comparing this extracted hostname to the stored hostnames. This may be done in addition or as an alternative to monitoring the DNS query 401 at step 402 and/or monitoring the message 404 generated in response to the DNS query 403 at step 405. In the present example, the traffic type detector 100 will find no match between the extracted hostname of step 408 and one of the stored hostnames.

The local DNS server 40 then sends a message 409 to the UE 10 so as to respond to the DNS query 401. The payload section of message 409, in particular the answer section, will include the requested network address of the server 70. In addition, the payload section of message 409, in particular the question section and/or the answer section, message will typically also include the hostname for which the network address was requested in the DNS query 401. According to some embodiments, the traffic type detector 100 may also monitor the message 409 generated in response to the original DNS query 401, e.g. by extracting the hostname at step 410 and comparing this extracted hostname to the stored hostnames. This may be done in addition or as an alternative to monitoring the DNS query 401 at step 402, to monitoring the message 404 at step 405, and/or to monitoring the message 407 at step 408. In the present example, the traffic type detector 100 will find no match between the extracted hostname of step 408 and one of the stored hostnames.

The UE 10 then sends a message 411 to the server 70 to request a portal page, e.g. by sending a HTTP get request to the server 70. Typically, the payload section of the message 411, in particular the request header, will also include the hostname of the server 70. According to some embodiments, the traffic type detector 100 may also monitor the message 411, e.g. by extracting the hostname at step 412 and comparing the extracted hostname of step 412 to the stored hostnames. This may be done in addition or as an alternative to monitoring the DNS query 401 at step 402, to monitoring the message 404 at step 405, to monitoring the message 407 at step 408, and/or to monitoring the message 409 at step 410. In the present example, the traffic type detector 100 will find no match between the extracted hostname of step 412 and one of the stored hostnames. The server 70 responds to the request of the message 411 with a message 413 including a portal page with one or more hostnames referring to content which is cached by a content delivery service.

In order to obtain the content referred to by one of the hostnames returned in the message 413, the UE 10 then sends a DNS query 414 to the local DNS server 40 to obtain the network address of associated with this hostname. The payload section of the DNS query 414, in particular the question section, includes the hostname. Accordingly, the DNS query 414 may be monitored by the traffic type detector 100 by extracting the hostname at step 415 and comparing the extracted hostname to the stored hostnames. In the present example, the traffic type detector 100 will find no match between the extracted hostname of step 415 and one of the stored hostnames.

When now assuming that the local DNS server 40 itself does not know the network address associated with the hostname referring to the content, but that this hostname is associated with the domain handled by the domain DNS server 60, the local DNS server will now directly issue a further DNS query 416 to the domain DNS server 60. The domain DNS server 60 knows that the content the hostname refers to is provided by the content delivery service under a redirect hostname and therefore responds to the DNS query 416 with a message 417. The payload section of the message 417, in particular the answer section, includes the redirect hostname associated with a cache server system providing the content from a cache server 90. According to some embodiments, the traffic type detector 100 may also monitor the message 417 generated in response to the DNS query 416, e.g. by extracting the redirect hostname at step 418 and comparing this extracted redirect hostname to the stored hostnames. In the present example, the traffic type detector 100 will find a match between the extracted redirect hostname of step 418 and one of the stored hostnames, and therefore initiate the adaptation of the QoS level provided for communicating data packets with respect to the UE 10. This adaptation may be specific with respect to the UE 10 issuing the DNS query 414, i.e. other UEs may keep their original QoS level. The UE 10 may be identified by the traffic type detector 100 on the basis of a source network address in the protocol header of the DNS query 414, e.g. a source IP address. For this purpose, the traffic type detector may also extract the source network address from the protocol header of the DNS query 414. In some embodiments, the traffic type detector 100 may relate the DNS query 414 and the message 417 to each other, because the message 417 also includes the same hostname for which the network address was requested in the DNS query 414. This is an example of how the traffic type detector 100 can identify a node, here the UE 10, communicating the data packets on the basis of a network address included not in the monitored message itself, which in the present example is the message 417, but in a further message in response to which the monitored message is generated. In the present example, this further message is the DNS query 414, which is the original DNS query in a sequence of DNS messages.

On the basis of the redirect hostname included in the message 417, the local DNS server 40 now issues a further DNS query 419 to the external DNS server 50 to obtain the network address associated with the redirect hostname. The external DNS server 50 responds with a message 420. The payload section of the message 420, in particular the authoritative section, includes the network address of a high level domain DNS server 80 serving the domain of the content delivery service. In addition, payload section of the message 420, in particular the question section, will typically also include the redirect hostname for which the network address was requested in the DNS query 419. According to some embodiments, the traffic type detector 100 may also monitor the message 420 generated in response to the DNS query 419, e.g. by extracting the redirect hostname at step 421 and comparing this extracted redirect hostname to the stored hostnames. This may be done in addition or as an alternative to monitoring the message 417 at step 418. In the present example, the traffic type detector 100 will find a match between the extracted redirect hostname of step 421 and one of the stored hostnames, and therefore initiate the adaptation of the QoS level provided for communicating data packets with respect to the UE 10. This adaptation may be specific with respect to the UE 10 issuing the DNS query 414, i.e. other UEs may keep their original QoS level. The UE 10 may be identified by the traffic type detector 100 on the basis of a source network address in the protocol header of the DNS query 414, e.g. a source IP address. For this purpose, the traffic type detector 100 may also extract the source network address from the protocol header of the DNS query 414. In some embodiments, the traffic type detector 100 may relate the DNS query 414 and the message 420 to each other, because the message 420 also includes the same hostname for which the network address was requested in the DNS query 414. This is a further example of how the traffic type detector 100 can identify a node, here the UE 10, communicating the data packets on the basis of a network address included not in the monitored message itself, which in the present example is the message 420, but in a further message in response to which the monitored message is generated. In the present example, this further message is the DNS query 414, which is the original DNS query in a sequence of DNS messages.

The local DNS server 40 now issues a further DNS query 422 for the network address associated with the redirect hostname to the high level domain DNS server 80. At step 423, the high level domain DNS server 80 selects a cache cluster from which to deliver the content. The high level domain DNS server 80 returns a message 424 to the local DNS server 40. The payload section of the message 424, in particular the authoritative section,includes a network address of a low level domain DNS server 85 serving the selected cache cluster. In addition, the payload section of the message 424, in particular the question section, will typically also include the redirect hostname for which the network address was requested in the DNS query 422. According to some embodiments, the traffic type detector 100 may also monitor the message 424 generated in response to the DNS query 422, e.g. by extracting the redirect hostname at step 425 and comparing this extracted redirect hostname to the stored hostnames. This may be done in addition or as an alternative to monitoring the message 417 at step 418 and/or to monitoring the message 420 at step 421. In the present example, the traffic type detector 100 will find a match between the extracted redirect hostname of step 425 and one of the stored hostnames, and therefore initiate the adaptation of the QoS level provided for communicating data packets with respect to the UE 10. This adaptation may be specific with respect to the UE 10 issuing the DNS query 414, i.e. other UEs may keep their original QoS level. The UE 10 may be identified by the traffic type detector 100 on the basis of a source network address in the protocol header of the DNS query 414, e.g. a source IP address. For this purpose, the traffic type detector may also extract the source network address from the protocol header of the DNS query 414. In some embodiments, the traffic type detector 100 may relate the DNS query 414 and the message 424 to each other, because the message 424 also includes the same hostname for which the network address was requested in the DNS query 414. This is a still further example of how the traffic type detector 100 can identify a node, here the UE 10, communicating the data packets on the basis of a network address included not in the monitored message itself, which in the present example is the message 424, but in a further message in response to which the monitored message is generated. In the present example, this further message is the DNS query 414, which is the original DNS query in a sequence of DNS messages.

The local DNS server 40 now issues a further DNS query 426 for the network address associated with the redirect hostname to the low level domain DNS server 85. At step 427, the low level domain DNS server 85 selects a cache server from which to deliver the content, which in the present example is the cache server 90. The low level domain DNS server 85 returns a message 428 to the local DNS server 40. The payload section of the message 428, in particular the answer section, includes a network address of the cache server 90. In addition, the payload section of the message 428, in particular the question section, will typically also include the redirect hostname for which the network address was requested in the DNS query 426. According to some embodiments, the traffic type detector 100 may also monitor the message 428 generated in response to the DNS query 426, e.g. by extracting the redirect hostname at step 429 and comparing this extracted redirect hostname to the stored hostnames. This may be done in addition or as an alternative to monitoring the message 417 at step 418, to monitoring the message 420 at step 421, and/or to monitoring the message 424 at step 425. In the present example, the traffic type detector 100 will find a match between the extracted redirect hostname of step 429 and one of the stored hostnames, and therefore initiate the adaptation of the QoS level provided for communicating data packets with respect to the UE 10. This adaptation may be specific with respect to the UE 10 issuing the DNS query 414, i.e. other UEs may keep their original QoS level. The UE 10 may be identified by the traffic type detector 100 on the basis of a source network address in the protocol header of the DNS query 414, e.g. a source IP address. For this purpose, the traffic type detector may also extract the source network address from the protocol header of the DNS query 414. In some embodiments, the traffic type detector 100 may relate the DNS query 414 and the message 428 to each other, because the message 424 also includes the same hostname for which the network address was requested in the DNS query 414. This is a still further example of how the traffic type detector 100 can identify a node, here the UE 10, communicating the data packets on the basis of a network address included not in the monitored message itself, which in the present example is the message 428, but in a further message in response to which the monitored message is generated. In the present example, this further message is the DNS query 414, which is the original DNS query in a sequence of DNS messages.

From the message 428, the traffic type detector 100 may also extract the network address of the cache server 90, which may be used as a basis for generating one or more of the packet filters 62, 64, 72, 74 for routing the data packets communicated between the UE 10 and the cache server 90 to a desired bearer, e.g. a newly established dedicated bearer. In particular, the packet filter(s) may be generated to operate on the basis of the extracted network address. Accordingly, this is a further example of how the traffic type detector 100 may initiate generation of a packet filter operating on the basis of the a network address extracted from a message, which in the present example is the message 428. The message 428 may be the one which is monitored so as to trigger the adaptation of the QoS: The message 428 may also be not the monitored message itself, but a further message generated in response to the monitored message, e.g. if the monitored message triggering the adaptation of the QoS level is one of the messages 414, 417, or 424, or a further message in response to which the monitored message is generated, e.g. if the monitored message triggering the adaptation of the QoS level is one of the subsequently generated messages 430 or 432.

The local DNS server 40 then sends the message 430 to the UE 10 so as to respond to the DNS query 414. The payload section of the message 430, in particular the answer section, will include the requested network address of the cache server 90. In addition, the payload section of the message 430, in particular the question section and the answer section, will typically also include the hostname for which the network address was requested in the DNS query 414 and the redirect hostname as returned in message 417. According to some embodiments, the traffic type detector 100 may also monitor the message 430 generated in response to the DNS query 414, e.g. by extracting the hostname and redirect hostname at step 431 and comparing these extracted hostnames to the stored hostnames. This may be done in addition or as an alternative to monitoring the DNS query 414 at step 415, to monitoring the message 417 at step 418, to monitoring the message 420 at step 421, to monitoring the message 424 at step 425, and /or to monitoring the message 428 at step 429. In the present example, the traffic type detector 100 will find a match between the extracted redirect hostname of step 431 and one of the stored hostnames, and therefore initiate the adaptation of the QoS level provided for communicating data packets with respect to the UE 10. This adaptation may be specific with respect to the UE 10 issuing the DNS query 414, i.e. other UEs may keep their original QoS level. The UE 10 may be identified by the traffic type detector 100 on the basis of a destination network address in the protocol header of the message 430, e.g. a destination IP address. For this purpose, the traffic type detector may also extract the destination network address from the protocol header of the message 430. This is a still further example of how the traffic type detector 100 can identify a node, here the UE 10, communicating the data packets on the basis of a network address included in the monitored message itself, which in the present example is the message 430.

From the message 430, the traffic type detector 100 may also extract the network address of the cache server 90, which may be used as a basis for generating one or more of the packet filters 62, 64, 72, 74 for routing the data packets communicated between the UE 10 and the cache server 90 to a desired bearer, e.g. a newly established dedicated bearer. In particular, the packet filter(s) may be generated to operate on the basis of the extracted network address. Accordingly, this is a further example of how the traffic type detector 100 may initiate generation of a packet filter operating on the basis of the a network address extracted from a message, which in the present example is the message 430. The message 430 may be the one which is monitored so as to trigger the adaptation of the QoS: The message 430 may also be not the monitored message itself, but a further message generated in response to the monitored message, e.g. if the monitored message triggering the adaptation of the QoS level is one of the messages 414, 417, 424, or 428, or a further message in response to which the monitored message is generated, e.g. if the monitored message triggering the adaptation of the QoS level is the subsequently generated message 432.

In addition, the destination network address of the message 430 may also be extracted by the traffic type detector 100. The extracted destination network address may be useful for identifying the UE 10 as needing the adaptation of the QoS level, which may be an alternative to evaluating the source network address in the protocol header of the DNS query 414. The extracted destination network address may also be useful for generating one or more of the packet filters 62, 64, 72, 74 for routing the data packets communicated between the UE 10 and the cache server 90 to a desired bearer, e.g. a newly established dedicated bearer. In particular, the packet filter(s) may be generated to operate on the basis of the extracted destination network address. Accordingly, this is a further example of how the traffic type detector 100 may initiate generation of a packet filter operating on the basis of the a network address extracted from a message, which in the present example is the message 430. The message 430 may be the one which is monitored so as to trigger the adaptation of the QoS: The message 430 may also be not the monitored message itself, but a further message generated in response to the monitored message, e.g. if the monitored message triggering the adaptation of the QoS level is one of the messages 414, 417, 424 or 428, or a further message in response to which the monitored message is generated, e.g. if the monitored message triggering the adaptation of the QoS level is one of the subsequently generated messages 430 or 432.

The UE 10 may then send a message 432 to the cache server 90 to request the content. For example the message 432 may include a HTTP request to get the content. Typically, the payload section of the message 432, in particular the request header, will also include the redirect hostname associated with the cache server 90. According to some embodiments, the traffic type detector 100 may also monitor the message 432, e.g. by extracting the redirect hostname at step 433 and comparing this extracted redirect hostname to the stored hostnames. This may be done in addition or as an alternative to monitoring the DNS query 414 at step 415, to monitoring the message 417 at step 418, to monitoring the message 420 at step 421, to monitoring the message 424 at step 425, to monitoring the message 428 at step 429, and/or to monitoring the message 430 at step 431. From the protocol header of the message 432, the traffic type detector 100 may also extract the network address of the cache server 90, which is the destination network address of the message 432 and may be used as a basis for generating one or more of the packet filters 62, 64, 72, 74 for routing the data packets communicated between the UE 10 and the cache server 90 to a desired bearer, e.g. a newly established dedicated bearer. In this case, the extracted destination network address may include not only the IP address of the cache server 90, but also a destination port used by the cache server 90. The packet filter(s) may thus be generated to operate on the basis of the extracted destination network address, e.g. on the basis of the extracted destination IP address and destination port. In addition, traffic type detector 100 may also extract the source network address from the protocol header of the message. The extracted source network address may be useful for identifying the UE 10 as needing the adaptation of the QoS level. This is a still further example of how the traffic type detector 100 can identify a node, here the UE 10, communicating the data packets on the basis of a network address included in the monitored message itself, which in the present example is the message 432. The extracted source network address may also be useful for generating one or more of the packet filters 62, 64, 72, 74 for routing the data packets communicated between the UE 10 and the cache server 90 to a desired bearer, e.g. a newly established dedicated bearer. In this case, the extracted source network address may include not only the IP address of the UE 10, but also a source port used by the UE 10. The packet filter(s) may thus be generated to operate on the basis of the extracted destination network address, e.g. on the basis of the extracted destination IP address and destination port. Accordingly, this is a further example of how the traffic type detector 100 may initiate generation of a packet filter operating on the basis of the a network address extracted from a message, which in the present example is the message 432. The message 432 may be the one which is monitored so as to trigger the adaptation of the QoS:

In addition or as an alternative to storing the redirect hostname, the traffic type detector 100 could also store the network address of the server 90 to indicate that data traffic with respect to the server 90 is to be regarded as premium traffic. In this case, the traffic type detector 100 can also monitor the messages 404, 407, 409, 417, 420, 424, 428, 430 with respect to the network address in the payload section of the message by extracting the network address from the payload section and comparing the extracted network address to the stored network addresses, which may be accomplished in steps 405, 408, 410, 418, 421, 425, 429, and 431, respectively. In the present example, the traffic type detector will find a match when monitoring the messages 428 and 430. The adaptation of the QoS level may then be accomplished as explained above for the case of monitoring the messages 428, 430 with respect to the hostnames.

It is to be understood that any of the extracted hostnames and/or other parameters such as network addresses in steps 402, 404, 408, 410, 412, 415, 418, 421, 425, 429, 431, and 433 may be used individually or in combination as a basis for initiating the adaptation of the level of QoS. Operation on the basis of only the or the message 411 message 432 may be useful if the UE 10 has already knowledge of the cache server's 90 network address, e.g. if the network address has been locally cached by the UE 10, so that there is no need for the UE 10 to issue the DNS query 414.

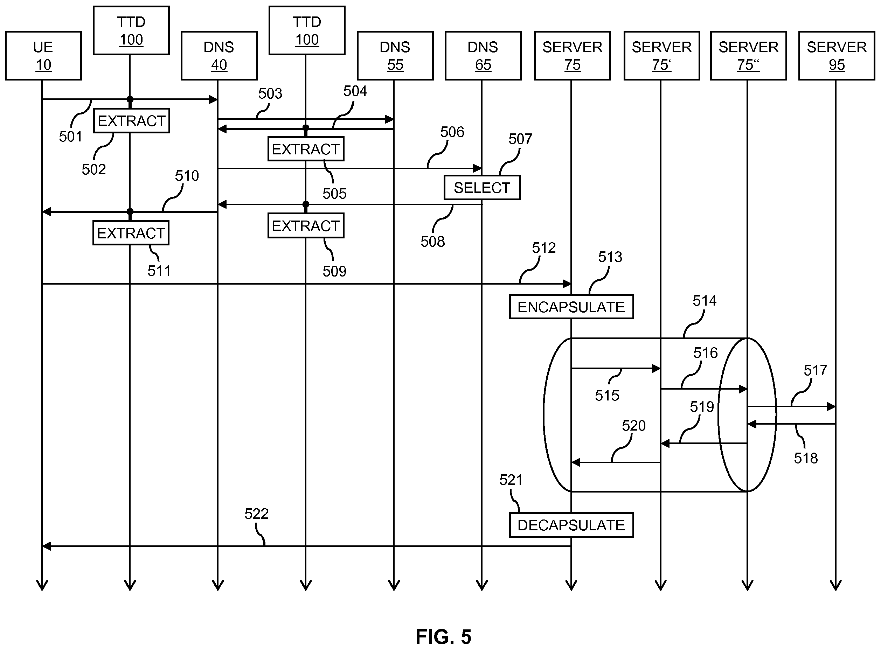

Fig. 5 shows an exemplary scenario, in which the UE 10 communicates data packets with a server 95, e.g. a privacy server, via an acceleration tunnel 514. Also in the scenario of Fig. 5, a response to an DNS query does not include the network address associated with the hostname, but a redirect hostname identifying a tunnel edge server 75 of the acceleration tunnel 514. Also in this example, it may be the redirect hostname which is stored by the traffic type detector 100 indicates that the data traffic with respect to the tunnel edge server 75 is to be regarded as premium traffic. In this example, the traffic type detector 100 therefore monitors messages between the UE 10 to the local DNS server 40 and also messages coming into the local DNS server 40 from external DNS servers. Therefore, Fig. 5 illustrates the traffic type detector 100 both between the UE 10 and the local DNS server 40, and also between the local DNS server 40 and external DNS servers. However, this does not mean that two separate instances of the traffic type detector 100 needs to be arranged at the illustrated locations. Rather, it may be sufficient to provide the traffic type detector 100 with copies of the traffic it is illustrated to monitor. In some embodiments, the traffic type detector may also be collocated with the local DNS server 40. Again, it will be first assumed that network addresses of involved servers are initially unknown to the UE 10.

In the scenario of Fig. 5, the UE 10 first issues a DNS query 501 for the network address associated with the server 95 to the local DNS server 40. The DNS query 501 includes the hostname associated with the privacy server 95. The hostname typically has the form of a domain name. The message 501 may be monitored by the traffic type detector 100 by extracting the hostname at step 502 and comparing the extracted hostname to the stored hostnames. In the present example, the traffic type detector 100 will find no match between the extracted hostname of step 502 and one of the stored hostnames.

When now assuming that the local DNS server 40 itself does not know the network address of the source of the content, but that the privacy server 95 belongs to a domain handled by a certain domain DNS server 55, the local DNS server 40 will issue a further DNS query 503 to the domain DNS server 55. The domain DNS server 55 knows that the server 95 is to be reached via the domain of a content delivery service under a redirect hostname and therefore responds to the DNS query 503 with a message 504. The payload section of the message 504, in particular the answer section, includes the redirect hostname associated with the tunnel edge server 75. Also the redirect hostname typically has the form of a domain name. According to some embodiments, the traffic type detector 100 may also monitor the message 504 generated in response to the DNS query 503, e.g. by extracting the redirect hostname at step 505 and comparing this extracted redirect hostname to the stored hostnames. In the present example, the traffic type detector 100 will find a match between the extracted redirect hostname of step 505 and one of the stored hostnames, and therefore initiate the adaptation of the QoS level provided for communicating data packets with respect to the UE 10. This adaptation may be specific with respect to the UE 10 issuing the DNS query 501, i.e. other UEs may keep their original QoS level. The UE 10 may be identified by the traffic type detector 100 on the basis of a source network address in the protocol header of the DNS query 501, e.g. a source IP address. For this purpose, the traffic type detector 100 may also extract the source network address from the protocol header of the DNS query 501. In some embodiments, the traffic type detector 100 may relate the DNS query 501 and the message 505 to each other, because the message 505 also includes the same hostname for which the network address was requested in the DNS query 501. This is a still further example of how the traffic type detector 100 can identify a node, here the UE 10, communicating the data packets on the basis of a network address included not in the monitored message itself, which in the present example is the message 505, but in a further message in response to which the monitored message is generated. In the present example, this further message is the DNS query 501, which is the original DNS query in a sequence of DNS messages.

On the basis of the redirect hostname included in the message 504, the local DNS server 40 now issues a further DNS query 506 for the network address associated with the redirect hostname to a domain DNS server 65 of the content delivery service. At step 507, the domain DNS server 65 selects a tunnel edge server on the basis of the redirect hostname and a mapping function, e.g. operating on the basis of a network address from which the DNS query 506 was received. In the illustrated example, the tunnel edge server 75 is selected. The domain DNS server 65 returns a message 508 to the local DNS server 40. The payload section of the message 508, in particular the answer section, includes a network address of the selected tunnel edge server 75. In addition, the payload section of the message 508, in particular the question section, will typically also include the redirect hostname for which the network address was requested in the DNS query 506. According to some embodiments, the traffic type detector 100 may also monitor the message 508 generated in response to the DNS query 506, e.g. by extracting the redirect hostname at step 509 and comparing this extracted redirect hostname to the stored hostnames. This may be done in addition or as an alternative to monitoring the message 501 at step 502, and/or to monitoring the message 504 at step 505. In the present example, the traffic type detector 100 will find a match between the extracted redirect hostname of step 509 and one of the stored hostnames, and therefore initiate the adaptation of the QoS level provided for communicating data packets with respect to the UE 10. This adaptation may be specific with respect to the UE 10 issuing the DNS query 501, i.e. other UEs may keep their original QoS level. The UE 10 may be identified by the traffic type detector 100 on the basis of a source network address in the protocol header of the DNS query 501, e.g. a source IP address. For this purpose, the traffic type detector may also extract the source network address from the protocol header of the DNS query 501. In some embodiments, the traffic type detector 100 may relate the DNS query 501 and the message 508 to each other by tracking the sequence of DNS queries 501, 503, 506 and the messages 504 generated in response to the DNS query 503. This is a still further example of how the traffic type detector 100 can identify a node, here the UE 10, communicating the data packets on the basis of a network address included not in the monitored message itself, which in the present example is the message 508, but in a further message in response to which the monitored message is generated. In the present example, this further message is the DNS query 501, which is the original DNS query in a sequence of DNS messages.

The local DNS server 40 then sends a message 510 to the UE 10 so as to respond to the DNS query 501. The payload section of the message 510, in particular the answer section, will include the network address of the tunnel edge server 75. In addition, the payload section of the message 510, in particular the question section and answer section, will typically also include the hostname for which the network address was requested in the DNS query 501 and the redirect hostname returned in the message 508. According to some embodiments, the traffic type detector 100 may also monitor the message 510 generated in response to the DNS query 501, e.g. by extracting the hostname and redirect hostname at step 511 and comparing these extracted hostnames to the stored hostnames. This may be done in addition or as an alternative to monitoring the DNS query 501 at step 502, to monitoring the message 504 at step 505, and/or to monitoring the message 508 at step 509. From the message 510, the traffic type detector 100 may also extract the network address of the tunnel edge server 75, which may be used as a basis for generating one or more of the packet filters 62, 64, 72, 74 for routing the data packets communicated between the UE 10 and the tunnel edge server 75 to a desired bearer, e.g. a newly established dedicated bearer. In particular, the packet filter(s) may be generated to operate on the basis of the extracted network address. Accordingly, this is a further example of how the traffic type detector 100 may initiate generation of a packet filter operating on the basis of the a network address extracted from a message, which in the present example is the message 510. The message 510 may be the one which is monitored so as to trigger the adaptation of the QoS: The message 510 may also be not the monitored message itself, but a further message generated in response to the monitored message, e.g. if the monitored message triggering the adaptation of the QoS level is one of the messages 501, 504, or 508.

In addition, the traffic type detector 100 may also extract a destination network address from a protocol header of the message 510, e.g. a destination IP address. The extracted destination network address may be useful for identifying the UE 10 as needing the adaptation of the QoS level, which may be an alternative to evaluating the source network address of the DNS query 501. This is a still further example of how the traffic type detector 100 can identify a node, here the UE 10, communicating the data packets on the basis of a network address included in the monitored message itself, which in the present example is the message 430.

The extracted destination network address may also be useful for generating one or more of the packet filters 62, 64, 72, 74 for routing the data packets communicated between the UE 10 and the tunnel edge server 75 to a desired bearer, e.g. a newly established dedicated bearer. In particular, the packet filter(s) may be generated to operate on the basis of the extracted destination network address.

The UE 10 may then send data packets 512 to the tunnel edge server 75. At step 513, the tunnel edge server 75 encapsulates the data packets for transmission into the tunnel 514. The transmission of the data packets within the tunnel 514 occurs from the tunnel edge server 75 to an intermediate tunnel edge server 75', as indicated at 515, and then to an outer tunnel edge server 75". From the outer tunnel edge server 75", the data packets are transmitted to the server 95, as indicated at 517. The server 95 returns data packets to the outer tunnel edge server 75" as indicated at 518. Within the acceleration tunnel the returned data packets are transmitted to the intermediate tunnel edge server 75', as indicated at 519, and then to the tunnel edge server 75, as indicated at 520. At step 521, the tunnel edge server 75 decapsulates the returned data packets for transmission to the UE 10, as indicated at 522.

In addition or as an alternative to storing the redirect hostname, the traffic type detector 100 could also store the network address of the tunnel edge server 75 to indicate that data traffic with respect to the tunnel edge server 75 is to be regarded as premium traffic. In this case, the traffic type detector 100 can also monitor the messages 504, 508, 510 with respect to the network address in the payload section of the message by extracting the network address from the payload section and comparing the extracted network address to the stored network addresses, which may be accomplished in steps 505, 509, and 510, respectively. In the present example, the traffic type detector will find a match when monitoring the messages 508 and 510. The adaptation of the QoS level may then be accomplished as explained above for the case of monitoring the messages 508, 510 with respect to the hostnames.

It is to be understood that any of the extracted hostnames and/or other parameters such as network addresses in steps 502, 505, 509, and 511 may be used individually or in combination as a basis for initiating the adaptation of the level of QoS.

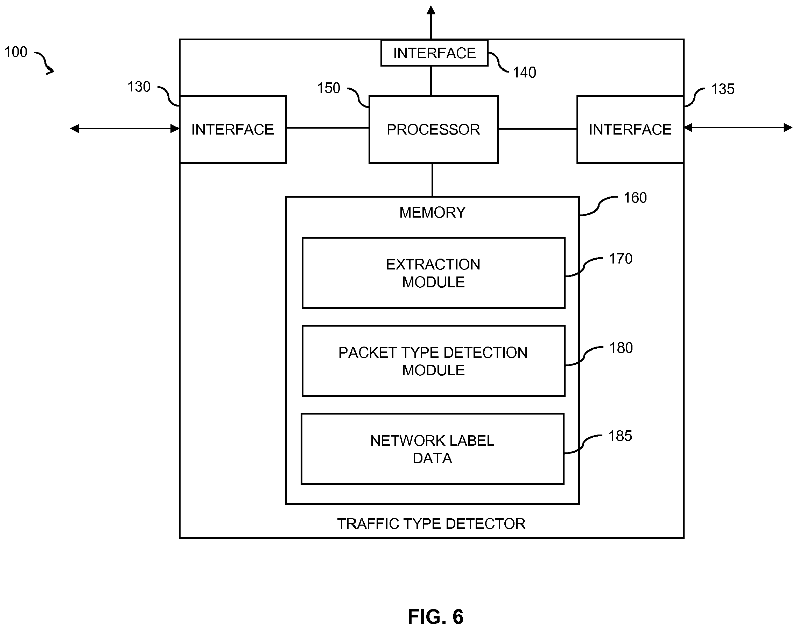

Fig. 6 further illustrates an exemplary implementation of the traffic type detector 100.

In the illustrated implementation, the traffic type detector 100 includes a reception interface 130 to receive messages coming from the UE 10 or directed to the UE 10. In some embodiments, the traffic type detector 100 may also be provided with a repeater interface 135, which may be used to forward the received messages to their intended destination. According to other embodiments, the repeater interface 135 for forwarding the messages may be omitted, e.g. if the traffic type detector is provided with copies of the messages coming from or directed to the UE 10. Moreover, the traffic type detector 100 may also be provided with a control interface 140, which can be used to indicate the detected traffic to other entities, e.g. to the policy controller 30 and/or to the gateway 26, and/or to initiate control processes with respect to forwarding procedures of data packets, e.g. modification and/or establishment of the bearers 52, 54. In the illustrated 3GPP scenario, the control interface 140 may be implemented as the Rx according to the 3GPP TSs. Further, the interface 140 may also be used to obtain network label data or other data from which the network label data may be derived.

Further, the traffic type detector 100 includes a processor 150 coupled to the interfaces 130, 135, 140 and a memory 160 coupled to the processor 150. The memory 160 may include a read-only memory (ROM), e.g. a flash ROM, a random-access memory (RAM), e.g. a Dynamic RAM (DRAM) or static RAM (SRAM), a mass storage, e.g. a hard disk or solid state disk, or the like. The memory 160 includes suitably configured program code to be executed by the processor 150 so as to implement the above-described functionalities of the traffic type detector 100. More specifically, the memory 160 may include an extraction module 170 so as to implement the above-described extraction of network labels, a traffic type detection module 180 so as to implement the above functionalities of monitoring the extracted network labels by comparison to stored network labels, and network label data, e.g. stored in the form of a table as illustrated in Fig. 2.

It is to be understood that the structure as illustrated in Fig. 6 is merely schematic and that the traffic type detector 100 may actually include further components which, for the sake of clarity, have not been illustrated, e.g. further interfaces. Also, it is to be understood that the memory 150 may include further types of program code modules, which have not been illustrated, e.g. program code modules for implementing functionalities obtaining or generating the network label data, e.g. a learning module. According to some embodiments, also a computer program product may be provided for implementing concepts according to embodiments of the invention, e.g. a medium storing the program code to be stored in the memory 160.

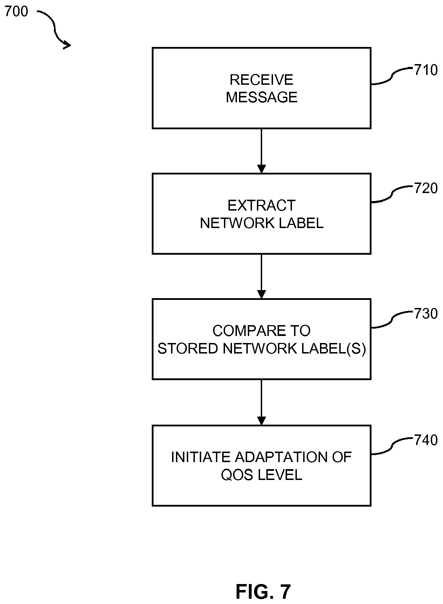

Fig. 7 shows a flowchart illustrating a method according to an embodiment of the invention. The method may be used in a mobile communication system as illustrated in Fig. 1 and in particular be implemented by the traffic type detector 100 . However, it is to be understood that the method may also be used in other network environments, e.g. in a wired communication system.

At step 710, a message is received. The message may be a setup message, e.g. a DNS query, a response to a DNS query, a HTTP request or any other type of message transmitted when setting up or preparing communication of data packets.

At step 720, a network label is extracted from the message. The network label may be in the form of a domain name, e.g. a domain name representing a hostname, any other type of hostname, or network address, e.g. an IP address.

At step 730, the extracted network label is compared to one or more stored network labels. For example, the stored network labels may be organized in the form of one or more lists or tables. Also, the network labels may be stored in association with a corresponding traffic class.

At step 740, adaptation of a QoS level for a forwarding treatment of data packets associated with the message is initiated on the basis of the comparison, e.g. if there is a match between the extracted network label and one of the stored network labels. This adaptation may involve controlling a bearer used for communicating the data packets. The data packets associated with the message may be data packets communicated with a network resource which can be, directly or indirectly, identified through the network label, e.g. by making one or more DNS queries for a hostname.

It is to be understood that the examples and embodiments as explained above are merely illustrative and susceptible to various modifications. For example, the concepts could be used in other types of communication network which benefit from differentiated handling of traffic types, e.g. in IP based networks in general. In such other types of communication networks, other mechanisms than controlling bearers may be used for adapting the QoS level. For example, in an IP based network Differentiated Services Code Point Fields of the data packets could be set in order to adapt the QoS level. Also, the concepts may be applied to any number of different traffic types. Further, it is to be understood that the above concepts may be implemented by using correspondingly designed software in existing network devices, or by using dedicated network device hardware.

## Claims

1. A method of handling network traffic, comprising:
receiving a Domain Name System message (301, 307, 401, 404, 407, 409, 411, 414, 417, 420, 424, 428, 430, 501, 504, 508, 510);
extracting a network label from a payload section of the Domain Name System message (301, 307, 401, 404, 407, 409, 411, 414, 417, 420, 424, 428, 430, 501, 504, 508, 510), the extracted network label identifying a network resource (70; 75; 90; 95);
**characterised by**
identifying a node (10) communicating data packets with the network resource on the basis of a network address included in the Domain Name System message (301, 307, 401, 407, 409, 411, 414, 428, 430, 501, 508, 510);
comparing the extracted network label to at least one stored network label to determine that data packets to be communicated between the node identified by said network address and the network resource require a certain quality of service level; and
on the basis of the comparison, initiating adaptation of a quality of service level for a forwarding treatment of data packets communicated between the node identified by said network address and the network resource (70; 75; 90; 95).

2. The method according to any one of the preceding claims,
wherein said adaptation of the quality of service level comprises controlling a bearer (52, 54) used for communicating the data packets.

3. The method according to claim 2,
wherein said controlling of the bearer (52, 54) comprises initiating modification of an existing bearer (52, 54).

4. The method according to claim 3,
wherein the existing bearer (52, 54) is returned to its state before modification in response to a triggering event.

5. The method according to any one of claims 2 to 4,
wherein said controlling of the bearer (52, 54) comprises initiating establishment of a dedicated bearer (54) to carry the data packets.

6. The method according to claim 5,
wherein the dedicated bearer (54) is deactivated in response to a triggering event.

7. The method according to any one of claims 2 to 6, comprising:
extracting a network address from the Domain Name System message (301, 307, 401, 407, 409, 411, 414, 428, 430, 501, 508, 510); and
initiating generation of a packet filter (64, 74) operating on the basis of the extracted network address, the packet filter (64, 74) being configured to route the data packets to the bearer (52, 54).

8. The method according to any one of claims 2 to 7, comprising:
receiving a further message (307; 407, 409, 428, 430; 508, 510) generated in response to the Domain Name System message (301; 401, 404, 407, 414, 417, 420, 424, 428; 501, 504, 508);
extracting a network address from the further message (307; 407, 409, 428, 430; 508, 510); and
initiating generation of a packet filter (64, 74) operating on the basis of the extracted network address, the packet filter (64, 74) being configured to route the data packets to the bearer (52, 54).

9. The method according to any one of claims 2 to 8, comprising:
receiving a further message (301; 401, 414, 428) in response to which the Domain Name System message (307; 404, 407, 409, 417, 420, 424, 428, 430; 504, 508, 510) is generated;
extracting a network address from the further message (301; 401, 414, 428); and
initiating generation of a packet filter (64, 74) operating on the basis of the extracted network address, the packet filter (64, 74) being configured to route the data packets to the bearer (54).

10. The method according to any one of the preceding claims,
wherein the network label is a domain name and the Domain Name System message (301; 401, 414, 501) is a Domain Name System query for a network address associated with the domain name.

11. The method according to any one of claims 1 to 9, wherein the network label is a domain name and the Domain Name System message (307; 404, 407, 409, 417, 420, 424, 428, 430; 504, 508, 510) is a response to a Domain Name System query for a network address associated with the domain name.

12. The method according to any one of claims 1 to 9, wherein the network label is a network address and the Domain Name System message (307; 404, 407, 409, 417, 420, 424, 428, 430; 504, 508, 510) is a response to a Domain Name System query for the network address.

13. A network device (100), comprising:
an interface (130) configured to receive a Domain Name System message (301, 307, 401, 404, 407, 409, 411, 414, 417, 420, 424, 428, 430, 501, 504, 508, 510);
a memory (160) configured to store at least one network label; and
a processor (150) configured to extract a network label from a payload section of the Domain Name System message (301, 307, 401, 404, 407, 409, 411, 414, 417, 420, 424, 428, 430, 501, 504, 508, 510), the extracted network label identifying a network resource (70; 75; 90; 95),
**characterised in that** the processor is configured
to identify a node (10) communicating data packets with the network resource on the basis of a network address included in the Domain Name System message (301, 307, 401, 407, 409, 411, 414, 428, 430, 501, 508, 510), to compare the extracted network label to the at least one stored network label to determine that the data packets to be communicated between the node identified by said network address and the network resource require a certain quality of service level, and to initiate, on the basis of the comparison, adaptation of a quality of service level for a forwarding treatment of data packets communicated between the node identified by said network address and the network resource (70; 75; 90; 95).

14. The network device (100) according to claim 13,
wherein the network device (100) is configured to operate according to a method as defined in any one of claims 1 to 12.

15. A computer program product comprising program code to be executed by a processor of a network device (100), thereby causing the network device (100) to perform a method as defined in any one of claims 1 to 12.

## Patentansprüche

1. Verfahren zur Handhabung von Netzverkehr, umfassend:
Empfangen einer Domänennamensystem-Nachricht (301, 307, 401, 404, 407, 409, 411, 414, 417, 420, 424, 428, 430, 501, 504, 508, 510);
Extrahieren einer Netzwerkbezeichnung aus einem Nutzlastabschnitt der Domänennamensystem-Nachricht (301, 307, 401, 404, 407, 409, 411, 414, 417, 420, 424, 428, 430, 501, 504, 508, 510), wobei die extrahierte Netzwerkbezeichnung eine Netzressource (70; 75; 90; 95) identifiziert;
**gekennzeichnet durch**
Identifizieren eines Knotens (10), der Datenpakete mit der Netzressource auf der Basis einer Netzadresse kommuniziert, die in der Domänennamensystem-Nachricht (301, 307, 401, 407, 409, 411, 414, 428, 430, 501, 508, 510) enthalten ist;
Vergleichen der extrahierten Netzwerkbezeichnung mit mindestens einer gespeicherten Netzwerkbezeichnung, um zu bestimmen, dass Datenpakete, die zwischen dem durch die Netzadresse identifizierten Knoten und der Netzressource kommuniziert werden sollen, einen bestimmten Dienstgütegrad erfordern; und
Initiieren auf der Basis des Vergleichs einer Anpassung eines Dienstgütegrads für eine Weiterleitungsbehandlung von Datenpaketen, die zwischen dem durch die Netzadresse identifizierten Knoten und der Netzressource (70; 75; 90; 95) kommuniziert werden.

2. Verfahren nach einem der vorhergehenden Ansprüche,
wobei die Anpassung des Dienstgütegrads ein Steuern eines Trägers (52, 54) umfasst, der zum Kommunizieren der Datenpakete verwendet wird.

3. Verfahren nach Anspruch 2,
wobei das Steuern des Trägers (52, 54) ein Initiieren der Modifikation eines bestehenden Trägers (52, 54) umfasst.

4. Verfahren nach Anspruch 3,
wobei der bestehende Träger (52, 54) in Reaktion auf ein Auslöseereignis in seinen Zustand vor der Modifikation zurückversetzt wird.

5. Verfahren nach einem der Ansprüche 2 bis 4,
wobei das Steuern des Trägers (52, 54) ein Initiieren des Aufbaus eines dedizierten Trägers (54) zum Übertragen der Datenpakete umfasst.

6. Verfahren nach Anspruch 5,
wobei der dedizierte Träger (54) in Reaktion auf ein Auslöseereignis deaktiviert wird.

7. Verfahren nach einem der Ansprüche 2 bis 6, umfassend:
Extrahieren einer Netzadresse aus der Domänennamensystem-Nachricht (301, 307, 401, 407, 409, 411, 414, 428, 430, 501, 508, 510); und
Initiieren der Erzeugung eines Paketfilters (64, 74), das auf der Basis der extrahierten Netzadresse funktioniert, wobei das Paketfilter (64, 74) zum Leiten der Datenpakete zum Träger (52, 54) konfiguriert ist.

8. Verfahren nach einem der Ansprüche 2 bis 7, umfassend:
Empfangen einer weiteren Nachricht (307; 407, 409, 428, 430; 508, 510), die in Reaktion auf die Domänennamensystem-Nachricht (301; 401, 404, 407, 414, 417, 420, 424, 428; 501, 504, 508) erzeugt wird;
Extrahieren einer Netzadresse aus der weiteren Nachricht (307; 407, 409, 428, 430; 508, 510); und
Initiieren der Erzeugung eines Paketfilters (64, 74), das auf der Basis der extrahierten Netzadresse funktioniert, wobei das Paketfilter (64, 74) zum Leiten der Datenpakete zum Träger (52, 54) konfiguriert ist.

9. Verfahren nach einem der Ansprüche 2 bis 8, umfassend:
Empfangen einer weiteren Nachricht (301; 401, 414, 428), wobei in Reaktion darauf die Domänennamensystem-Nachricht (307; 404, 407, 409, 417, 420, 424, 428, 430; 504, 508, 510) erzeugt wird;
Extrahieren einer Netzadresse aus der weiteren Nachricht (301; 401, 414, 428); und
Initiieren der Erzeugung eines Paketfilters (64, 74), das auf der Basis der extrahierten Netzadresse funktioniert, wobei das Paketfilter (64, 74) zum Leiten der Datenpakete zum Träger (54) konfiguriert ist.

10. Verfahren nach einem der vorhergehenden Ansprüche, wobei die Netzwerkbezeichnung ein Domänenname ist, und die Domänennamensystem-Nachricht (301; 401, 414, 501) eine Domänennamensystem-Abfrage einer Netzadresse ist, die mit dem Domänennamen assoziiert ist.

11. Verfahren nach einem der Ansprüche 1 bis 9, wobei die Netzwerkbezeichnung ein Domänenname ist, und die Domänennamensystem-Nachricht (307; 404, 407, 409, 417, 420, 424, 428, 430; 504, 508, 510) eine Antwort auf eine Domänennamensystem-Abfrage einer Netzadresse ist, die mit dem Domänennamen assoziiert ist.

12. Verfahren nach einem der Ansprüche 1 bis 9, wobei die Netzwerkbezeichnung eine Netzadresse ist, und die Domänennamensystem-Nachricht (307; 404, 407, 409, 417, 420, 424, 428, 430; 504, 508, 510) eine Antwort auf eine Domänennamensystem-Abfrage der Netzadresse ist.

13. Netzvorrichtung (100), umfassend:
eine Schnittstelle (130), die zum Empfangen einer Domänennamensystem-Nachricht (301, 307, 401, 404, 407, 409, 411, 414, 417, 420, 424, 428, 430, 501, 504, 508, 510) konfiguriert ist;
einen Speicher (160), der zum Speichern mindestens einer Netzwerkbezeichnung konfiguriert ist; und
einen Prozessor (150), der zum Extrahieren einer Netzwerkbezeichnung aus einem Nutzlastabschnitt der Domänennamensystem-Nachricht (301, 307, 401, 404, 407, 409, 411, 414, 417, 420, 424, 428, 430, 501, 504, 508, 510) konfiguriert ist, wobei die extrahierte Netzwerkbezeichnung eine Netzressource (70; 75; 90; 95) identifiziert;
**dadurch gekennzeichnet, dass** der Prozessor konfiguriert ist zum:
Identifizieren eines Knotens (10), der Datenpakete mit der Netzressource auf der Basis einer Netzadresse kommuniziert, die in der Domänennamensystem-Nachricht (301, 307, 401, 407, 409, 411, 414, 428, 430, 501, 508, 510) enthalten ist, Vergleichen der extrahierten Netzwerkbezeichnung mit mindestens einer gespeicherten Netzwerkbezeichnung, um zu bestimmen, dass Datenpakete, die zwischen dem durch die Netzadresse identifizierten Knoten und der Netzressource kommuniziert werden sollen, einen bestimmten Dienstgütegrad erfordern, und Initiieren auf der Basis des Vergleichs einer Anpassung eines Dienstgütegrads für eine Weiterleitungsbehandlung von Datenpaketen, die zwischen dem durch die Netzadresse identifizierten Knoten und der Netzressource (70; 75; 90; 95) kommuniziert werden.

14. Netzvorrichtung (100) nach Anspruch 13,
wobei die Netzvorrichtung (100) so konfiguriert ist, dass sie gemäß einem Verfahren nach einem der Ansprüche 1 bis 12 funktioniert.

15. Computerprogrammprodukt, umfassend Programmcode, der von einem Prozessor einer Netzvorrichtung (100) ausgeführt werden soll, um dadurch die Netzvorrichtung (100) zu veranlassen, ein Verfahren nach einem der Ansprüche 1 bis 12 durchzuführen.

## Revendications

1. Procédé de gestion de trafic de réseau, comprenant :
la réception d'un message de système de nom de domaine (301, 307, 401, 404, 407, 409, 411, 414, 417, 420, 424, 428, 430, 501, 504, 508, 510) ;
l'extraction d'une étiquette de réseau à partir d'une section de charge utile du message de système de nom de domaine (301, 307, 401, 404, 407, 409, 411, 414, 417, 420, 424, 428, 430, 501, 504, 508, 510), l'étiquette de réseau extraite identifiant une ressource de réseau (70 ; 75 ; 90 ; 95) ;
**caractérisé par**
l'identification d'un noeud (10) communiquant des paquets de données avec la ressource de réseau sur la base d'une adresse de réseau incluse dans le message de système de nom de domaine (301, 307, 401, 407, 409, 411, 414, 428, 430, 501, 508, 510) ;
la comparaison de l'étiquette de réseau extraite à au moins une étiquette de réseau mémorisée pour déterminer que des paquets de données à communiquer entre le noeud identifié par ladite adresse de réseau et la ressource de réseau nécessitent un certain niveau de qualité de service ; et
sur la base de la comparaison, le lancement d'une adaptation d'un niveau de qualité de service pour un traitement de transfert de paquets de données communiqués entre le noeud identifié par ladite adresse de réseau et la ressource de réseau (70 ; 75 ; 90 ; 95).

2. Procédé selon la revendication 1,
dans lequel ladite adaptation du niveau de qualité de service comprend la commande d'un support (52, 54) utilisé pour communiquer les paquets de données.

3. Procédé selon la revendication 2,
dans lequel ladite commande du support (52, 54) comprend le lancement d'une modification d'un support existant (52, 54).

4. Procédé selon la revendication 3,
dans lequel le support existant (52, 54) est remis dans son état avant une modification en réponse à un événement de déclenchement.

5. Procédé selon l'une quelconque des revendications 2 à 4,
dans lequel ladite commande du support (52, 54) comprend le lancement d'un établissement d'un support dédié (54) pour porter les paquets de données.

6. Procédé selon la revendication 5,
dans lequel le support dédié (54) est désactivé en réponse à événement de déclenchement.

7. Procédé selon l'une quelconque des revendications 2 à 6, comprenant :
l'extraction d'une adresse de réseau à partir du message de système de nom de domaine (301, 307, 401, 407, 409, 411, 414, 428, 430, 501, 508, 510) ; et
le lancement d'une génération d'un filtre de paquets (64, 74) fonctionnant sur la base de l'adresse de réseau extraite, le filtre de paquets (64, 74) étant configuré pour acheminer les paquets de données jusqu' au support (52, 54).

8. Procédé selon l'une quelconque des revendications 2 à 7, comprenant :
la réception d'un autre message (307 ; 407, 409, 428, 430 ; 508, 510) généré en réponse au message de système de nom de domaine (301 ; 401, 404, 407, 414, 417, 420, 424, 428 ; 501, 504, 508) ;
l'extraction d'une adresse de réseau à partir de l'autre message (307 ; 407, 409, 428, 430 ; 508, 510) ; et
le lancement d'une génération d'un filtre de paquets (64, 74) fonctionnant sur la base de l'adresse de réseau extraite, le filtre de paquets (64, 74) étant configuré pour acheminer les paquets de données jusqu' au support (52, 54).

9. Procédé selon l'une quelconque des revendications 2 à 8, comprenant :
la réception d'un autre message (301 ; 401, 414, 428) en réponse auquel le message de système de nom de domaine (307 ; 404, 407, 409, 417, 420, 424, 428, 430 ; 504, 508, 510) est généré ;
l'extraction d'une adresse de réseau à partir de l'autre message (301 ; 401, 414, 428) ; et
le lancement d'une génération d'un filtre de paquets (64, 74) fonctionnant sur la base de l'adresse de réseau extraite, le filtre de paquets (64, 74) étant configuré pour acheminer les paquets de données jusqu'au support (54).

10. Procédé selon l'une quelconque des revendications précédentes,
dans lequel l'étiquette de réseau est un nom de domaine et le message de système de nom de domaine (301 ; 401, 414, 501) est une interrogation de système de nom de domaine pour une adresse de réseau associée au nom de domaine.

11. Procédé selon l'une quelconque des revendications 1 à 9, dans lequel l'étiquette de réseau est un nom de domaine et le message de système de nom de domaine (307 ; 404, 407, 409, 417, 420, 424, 428, 430 ; 504, 508, 510) est une réponse à une interrogation de système de nom de domaine pour une adresse de réseau associée au nom de domaine.

12. Procédé selon l'une quelconque des revendications 1 à 9, dans lequel l'étiquette de réseau est une adresse de réseau et le message de système de nom de domaine (307 ; 404, 407, 409, 417, 420, 424, 428, 430 ; 504, 508, 510) est une réponse à une interrogation de système de nom de domaine pour l'adresse de réseau.

13. Dispositif de réseau (100), comprenant :
une interface (130) configurée pour effectuer la réception d'un message de système de nom de domaine (301, 307, 401, 404, 407, 409, 411, 414, 417, 420, 424, 428, 430, 501, 504, 508, 510) ;
une mémoire (160) configurée pour effectuer la mémorisation d'au moins une étiquette de réseau ; et un processeur (150) configuré pour effectuer l'extraction d'une étiquette de réseau à partir d'une section de charge utile du message de système de nom de domaine (301, 307, 401, 404, 407, 409, 411, 414, 417, 420, 424, 428, 430, 501, 504, 508, 510), l'étiquette de réseau extraite identifiant une ressource de réseau (70 ; 75 ; 90 ; 95) ;
**caractérisé en ce que** le processeur est configuré pour effectuer
l'identification d'un noeud (10) communiquant des paquets de données avec la ressource de réseau sur la base d'une adresse de réseau incluse dans le message de système de nom de domaine (301, 307, 401, 407, 409, 411, 414, 428, 430, 501, 508, 510), la comparaison de l'étiquette de réseau extraite à l'au moins une étiquette de réseau mémorisée pour déterminer que les paquets de données à communiquer entre le noeud identifié par ladite adresse de réseau et la ressource de réseau nécessitent un certain niveau de qualité de service, et le lancement, sur la base de la comparaison, d'une adaptation d'un niveau de qualité de service pour un traitement de transfert de paquets de données communiqués entre le noeud identifié par ladite adresse de réseau et la ressource de réseau (70 ; 75 ; 90 ; 95).

14. Dispositif de réseau (100) selon la revendication 13,
dans lequel le dispositif de réseau (100) est configuré pour fonctionner conformément à un procédé selon l'une quelconque des revendications 1 à 12.

15. Produit de programme informatique comprenant un code de programme à exécuter par un processeur d'un dispositif de réseau (100), en amenant de ce fait le dispositif de réseau (100) à effectuer un procédé selon l'une quelconque des revendications 1 à 12.
